# EUROPEAN PATENT APPLICATION

(11) **EP 4 746 175 A1**
(43) Date of publication of application: **20.05.2026**
(21) Application number: 24839542.8
(22) Date of filing: 27.06.2024
(51) Int. Cl.: H01M 50/505, H01M 50/289, H01M 50/503, H01M 50/569, H01M 50/588, H01M 50/59, H01M 50/591

(54) **BATTERY PACK**

(30) Priority: 12.07.2023 JP 2023114715
(71) Applicant: AESC Japan Ltd., Yokohama-shi, Kanagawa 220-0012 (JP)
(72) Inventor: TAKAGI, Gentaro, Zama-shi, Kanagawa 252-0012 (JP); MATSUURA, Moritaka, Zama-shi, Kanagawa 252-0012 (JP); NAKAI, Masayuki, Zama-shi, Kanagawa 252-0012 (JP); TOYOSAKI, Shinkichi, Zama-shi, Kanagawa 252-0012 (JP); NARUSE, Mikio, Zama-shi, Kanagawa 252-0012 (JP); YOSHIOKA, Shinichi, Zama-shi, Kanagawa 252-0012 (JP)
(74) Representative: Mathys & Squire
(86) International application number: PCT/JP2024/023375
(87) International publication number: WO 2025/013650

(57) **Abstract**

The battery pack (100) includes a housing (10), a first battery module (20a), a second battery module (20b), a beam member (30), a connecting member (40), and a holding member (50). The first battery module (20a) is disposed in the housing (10). The second battery module (20b) is disposed side by side with the first battery module (20a). The beam member (30) is disposed between the first battery module (20a) and the second battery module (20b) and extends in one direction. The connecting member (40) electrically connects the first battery module (20a) and the second battery module (20b). The connecting member (40) includes an extending portion (41). The extending portion (41) extends in an arrangement direction in which the first battery module (20a) and the second battery module are arranged. The holding member (50) holds the extending portion (41). The extending portion (41) is disposed between the holding member (50) and the beam member (30).

## Description

### TECHNICAL FIELD

The present invention relates to a battery pack.

### BACKGROUND ART

A technique related to a bus bar that connects battery packs to each other is disclosed in, for example, Patent Document 1.

### RELATED DOCUMENT

### PATENT DOCUMENT

Patent Document 1: U.S. Unexamined Patent Publication No. 2019/0305282

### SUMMARY OF THE INVENTION

### TECHNICAL PROBLEM

In a case where a large amount of current flows through the bus bar, the bus bar generates a large amount of heat. The bus bar is made of metal and may have a large self-weight, and the heated bus bar is likely to be deformed. In addition, the deformed bus bar may come into contact with a metal portion of the battery module and may be short-circuited.

An example of the object of the present invention is to suppress unintended contact between the battery module and the bus bar due to deformation of the bus bar.

### SOLUTION TO PROBLEM

According to the present invention, the following technology is provided.
1. A battery pack including:
   a housing,
   a first battery module disposed in the housing,
   a second battery module disposed side by side with the first battery module,
   a beam member disposed between the first battery module and the second battery module and extending in one direction, and
   a connecting member that electrically connects the first battery module and the second battery module,
   in which the connecting member includes an extending portion that extends in an arrangement direction in which the first battery module and the second battery module are arranged side by side,
   the battery pack further includes a holding member that holds the extending portion, and
   the extending portion is disposed between the holding member and the beam member.

### ADVANTAGEOUS EFFECTS OF INVENTION

According to the aspect of the present invention, unintended contact between the battery module and the bus bar due to deformation of the bus bar can be suppressed.

### BRIEF DESCRIPTION OF THE DRAWINGS

[FIG. 1] A schematic perspective view of a battery pack according to a first embodiment.
[FIG. 2] A schematic top view of the battery pack according to the first embodiment in a state where an upper case is detached.
[FIG. 3] A perspective view of a periphery of a connecting member in a state where the battery module is detached.
[FIG. 4] An enlarged view of an F part of FIG. 3.
[FIG. 5] A schematic perspective view showing a periphery of a holding member according to the first embodiment.
[FIG. 6] A schematic perspective view showing a periphery of a holding member according to a second embodiment.
[FIG. 7] A schematic perspective view showing a periphery of a holding member according to a third embodiment.

### DESCRIPTION OF EMBODIMENTS

Hereinafter, an embodiment of the present invention will be described with reference to the drawings. In all drawings, the same constituent elements are denoted by the same reference signs, and a detailed description thereof will not be repeated.

### <First Embodiment>

### (Battery Pack 100)

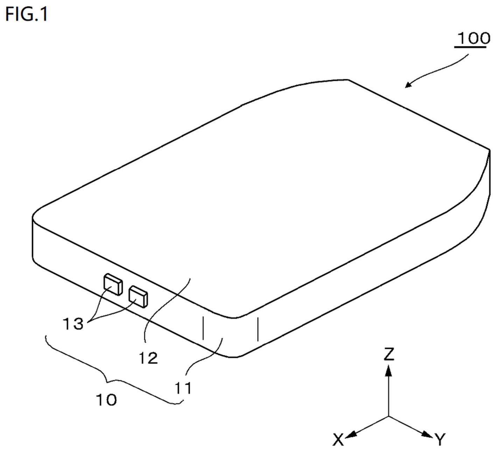

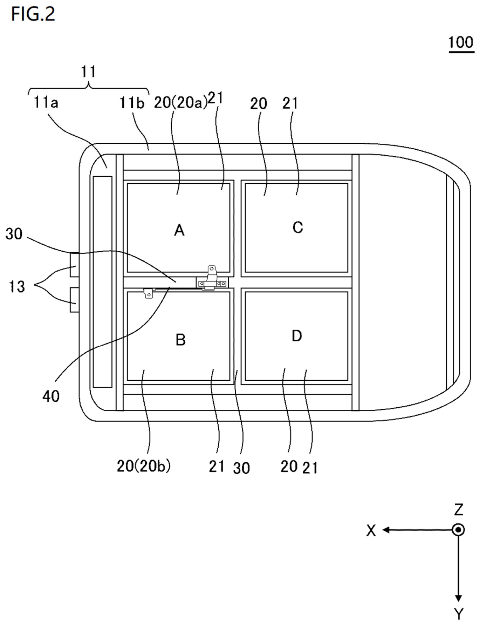

FIG. 1 is a schematic perspective view of a battery pack 100 according to the first embodiment. FIG. 2 is a schematic top view of the battery pack 100 according to the first embodiment in a state where an upper case 12 is detached.

In the first embodiment, the battery pack 100 is mounted on an automobile. Specifically, the battery pack 100 is mounted between front wheels and rear wheels of the automobile. Hereinafter, the battery pack 100 will be described as being mounted on the automobile unless otherwise specified. However, the battery pack 100 can be applied to applications other than the automobile.

In each of the drawings, X direction, Y direction, and Z direction are illustrated for description. The X direction indicates a front-rear direction of the battery pack 100. The Y direction is orthogonal to the X direction. The Y direction indicates a left-right direction of the battery pack 100. The Z direction is orthogonal to both the X direction and the Y direction. The Z direction indicates an up-down direction of the battery pack 100. An arrow indicating the X direction, an arrow indicating the Y direction, and an arrow indicating the Z direction indicate a front direction, a left direction, and an up direction of the battery pack 100, respectively. In FIG. 2, a white circle with a black dot indicating the Z direction indicates that an arrow indicating the Z direction extends from behind a paper plane to a front side of the paper plane. However, the relationship between the X direction, the Y direction, and the Z direction and the front-rear direction, the left-right direction, and the up-down direction of the battery pack 100 is not limited to this example.

In the first embodiment, the front-rear direction, the left-right direction, and the up-down direction of the battery pack 100 are determined by the automobile on which the battery pack 100 is mounted. The X direction, the Y direction, and the Z direction indicate a front-rear direction, a left-right direction, and an up-down direction of the automobile, respectively. An arrow indicating the X direction, an arrow indicating the Y direction, and an arrow indicating the Z direction indicate a front direction, a left direction, and an up direction of the automobile, respectively. However, the relationship between the front-rear direction, the left-right direction, and the up-down direction of the battery pack 100 and the front-rear direction, the left-right direction, and the up-down direction of the automobile is not limited to this example.

### (Housing 10, Battery Module 20)

The battery pack 100 includes the housing 10 and a plurality of battery modules 20. In the first embodiment, the battery pack 100 includes four battery modules 20 (A to D in FIG. 2) disposed around a substantially central portion of the housing 10 as viewed in the Z direction. However, the number and the disposition of the battery modules 20 included in the battery pack 100 are not limited to this example. For example, a plurality of battery modules 20 disposed around the substantially central portion of the housing 10 may be provided.

The housing 10 includes a lower case 11, an upper case 12, and a pair of terminals 13. The lower case 11 may be referred to as, for example, a tray or a body portion. The lower case 11 includes a lower plate 11a and an outer frame 11b. The upper case 12 may be generally referred to as, for example, a cover or a lid portion.

As shown in FIG. 2, the outer frame 11b surrounds the plurality of battery modules 20 as viewed in the Z direction. A sealing material (not shown) is disposed on an upper surface side of the outer frame 11b. Therefore, the lower case 11 and the upper case 12 can be attached to each other in a state where the sealing material is disposed between an upper surface of the outer frame 11b and a lower surface of a portion of the upper case 12 overlapping the outer frame 11b in the Z direction. Therefore, the lower case 11 and the upper case 12 can form a housing space in which the plurality of battery modules 20 are housed.

The pair of terminals 13 are provided in front of the outer frame 11b. The pair of terminals 13 are arranged substantially in parallel in the Y direction. A front end portion of each terminal 13 protrudes forward from a front surface of the outer frame 11b. In an electrical path, the plurality of battery modules 20 are connected in series between the pair of terminals 13.

The plurality of battery modules 20 are mounted on an upper surface side of the lower plate 11a. Each battery module 20 includes a plurality of battery cells (not shown) laminated in the X direction (or the Y direction) and a housing case 21 in which the plurality of battery cells are housed. For example, in each battery module 20, a plurality of battery cell groups including a plurality of battery cells connected in parallel are connected in series. Alternatively, a plurality of single battery cells may be connected in series.

A first battery module 20a according to the first embodiment indicates a certain specific battery module 20 among the battery modules 20. The first battery module 20a is disposed in the housing 10. The first battery module 20a (any one of A to D in FIG. 2) is disposed in a space formed by being partitioned by a beam member 30 described below. A second battery module 20b (any one of A to D in FIG. 2) is disposed side by side with the first battery module 20a. For example, in a case where the battery module 20 indicated by "A" in FIG. 2 is the first battery module 20a, the second battery module 20b may be the battery module 20 indicated by "B" in FIG. 2.

### (Beam member 30)

In the first embodiment, the battery pack 100 further includes the beam member 30. The beam member 30 is disposed between the first battery module 20a and the second battery module 20b and extends in one direction (X direction). In the first embodiment, the plurality of beam members 30 partition the space into four regions in which the battery modules 20 are arranged (see A to D in FIG. 2).

### (Connecting Member 40)

The battery pack 100 further includes a connecting member 40. The connecting member 40 electrically connects the first battery module 20a and the second battery module 20b. The connecting member 40 is a conductive metal member and is a so-called bus bar. In the first embodiment, the connecting member 40 connects a positive terminal (negative terminal) of the first battery module 20a and a negative terminal (positive terminal) of the second battery module 20b.

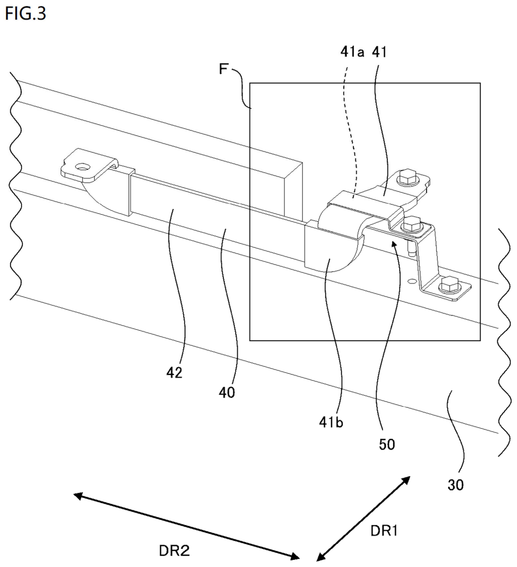

FIG. 3 is a perspective view of a periphery of the connecting member 40 in a state where the battery module 20 is detached. DR1 in FIG. 3 is an arrangement direction in which the first battery module 20a and the second battery module 20b are arranged. DR2 in FIG. 3 is a direction intersecting the arrangement direction DR1. In the first embodiment, the direction DR2 is (substantially) orthogonal to the arrangement direction DR1.

The connecting member 40 includes a plate-shaped elongated portion 42 and an extending portion 41. The elongated portion 42 extends in the direction DR2 (= X direction). In the first embodiment, the elongated portion 42 has a shape on a flat plate. The elongated portion 42 extends linearly with respect to the direction DR2. The extending portion 41 extends in the arrangement direction DR1 (= Y direction). The extending portion 41 is a portion that extends from the elongated portion 42 in the arrangement direction DR1. The extending portion 41 is electrically and mechanically connected to a positive terminal (or a negative terminal) of the first battery module 20a (or the second battery module 20b).

### (Holding Member 50)

The battery pack 100 further includes a holding member 50. The holding member 50 holds the extending portion 41 (connecting member 40) therebetween. In the first embodiment, the holding member 50 is, for example, a conductive metal member. In the first embodiment, the holding member 50 is provided on the beam member 30. In the first embodiment, the holding member 50 is attached to the beam member 30 and supports the extending portion 41 therebetween.

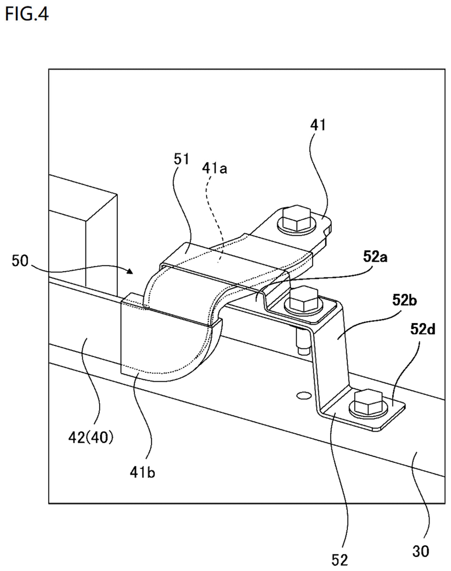

FIG. 4 is an enlarged view of the F part of FIG. 3. For ease of description, an upper holding portion 51, an insulating coating film portion 41a, and an insulating coating film portion 41b described below are shown in a transmissive manner. In the first embodiment, the holding member 50 includes an upper holding portion 51 and a lower holding portion 52. The upper holding portion 51 is provided on an upper side with respect to the extending portion 41 (connecting member 40). The lower holding portion 52 is provided on a lower side with respect to the extending portion 41 (connecting member 40). The lower holding portion 52 is attached to the beam member 30. The upper holding portion 51 is attached to the lower holding portion 52. The extending portion 41 is interposed between the upper holding portion 51 and the lower holding portion 52. More specifically, the lower holding portion 52 has a so-called convex bracket (or omega bracket) shape, and integrally includes a joining surface 52d, 52e that is provided at both ends and is fixed to the beam member 30, a standing surface 52b, 52c that is erected upward from each of the joining surfaces 52d, 52e, and an upper surface 52a that is provided between the standing surfaces 52b, 52c. The lower holding portion 52 and the beam member 30 are fixed to each other by a bolt, for example. The upper holding portion 51 has a convex bracket (or omega bracket) shape, is attached to overlap the upper surface 52a of the lower holding portion 52, and interposes the extending portion 41 between the lower holding portion 52. The upper holding portion 51 and the lower holding portion 52 are fixed to each other by a bolt, for example.

The extending portion 41 has the insulating coating film portion 41a at a portion interposed between the holding members 50. The insulating coating film portion 41a is an insulating coating film. A portion of the extending portion 41 interposed between the holding members 50 (the upper holding portion 51 and the lower holding portion 52) is coated with an insulating coating film. The extending portion 41 may have a portion that is coated with an insulating coating film other than the insulating coating film portion 41a (for example, an insulating coating film portion 41b).

### (Signal Line Portion 60)

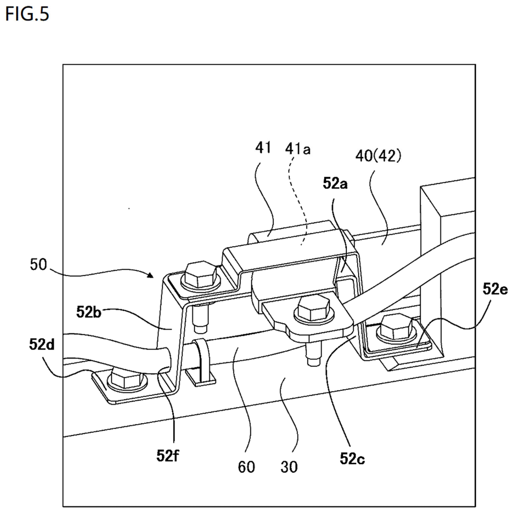

FIG. 5 is a schematic perspective view showing a periphery of the holding member 50 according to the first embodiment. The battery pack 100 further includes a signal line portion 60. The signal line portion 60 transmits a signal related to the battery module 20. The signal related to the battery module 20 is, for example, a voltage or a current of the battery module 20.

The signal line portion 60 extends from the battery module 20 and is disposed in the housing 10. The signal line portion 60 according to the first embodiment passes below the holding member 50 (upper holding portion 51). The signal line portion 60 according to the first embodiment passes above the beam member 30. More specifically, as shown in FIG. 5, the signal line portion 60 is inserted into a through-hole 52f provided in one standing surface 52b of the holding member 50. As a result, the signal line portion 60 passes between the upper surface of the beam member 30 and the upper surface 52a of the lower holding portion 52. The through-hole 52f is shown only in FIG. 5 and is omitted in other drawings.

According to the first embodiment, the battery pack 100 includes the housing 10, the first battery module 20a, the second battery module 20b, the connecting member 40, and the holding member 50. The holding member 50 holds the extending portion 41 therebetween. As a result, the movement of the extending portion 41 in the up-down direction (Z direction) is suppressed.

In a case where a large amount of current flows through the connecting member 40 (bus bar), the connecting member 40 generates a large amount of heat. In particular, in a case where a connection portion between the extending portion 41 and the battery module 20 is heated, a resin portion around the connection portion is likely to be thermally deformed, and the extending portion 41 is also likely to be deformed by heat. Therefore, the extending portion 41 is likely to hang down in the lower direction. However, since the movement of the extending portion 41 in the lower direction is suppressed by the lower holding portion 52 (holding member 50), the extending portion 41 can be suppressed from hanging down in the lower direction.

**In** addition, even in a case where the extending portion 41 is intended to move upward due to the influence of the self-weight of the connecting member 40, the movement of the extending portion 41 in the up direction is suppressed by the upper holding portion 51 (holding member 50). Therefore, the movement of the extending portion 41 in the upward direction can also be suppressed.

As described above, by providing the configuration according to the first embodiment, unintended contact between the battery module 20 and the connecting member 40 (bus bar) due to deformation of the connecting member 40 (bus bar) can be suppressed. Therefore, the deformed connecting member 40 can be suppressed from being short-circuited by coming into contact with an unintended metal portion of the battery module 20.

In addition, the battery pack 100 according to the first embodiment further includes the beam member 30, and the holding member 50 is provided on the beam member 30. As a result, the holding member 50 can be stably fixed.

In addition, the extending portion 41 has the insulating coating film portion 41a at a portion interposed between the holding members 50. As a result, conduction between the connecting member 40 (extending portion 41) and the holding member 50 can be suppressed.

In addition, the battery pack 100 further includes the signal line portion 60 that passes below the holding member 50. By providing the through-hole 52f for passing the signal line portion 60 through the holding member 50, the signal line portion 60 can be reliably routed between the beam member 30 and the holding member 50. As a result, a space below the holding member 50 can be effectively used. Further, the wiring of the signal line portion 60 can be made to fit well.

### <Second Embodiment>

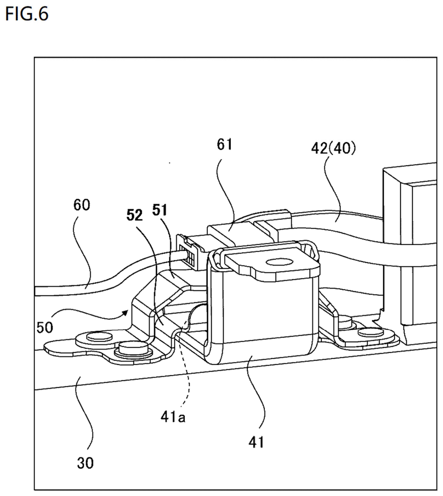

FIG. 6 is a schematic perspective view showing a periphery of the holding member 50 according to the second embodiment. The holding member 50 according to the second embodiment holds the extending portion 41. The extending portion 41 according to the second embodiment is disposed between the holding member 50 and the beam member 30. The holding member 50 is attached to the beam member 30 and is provided to cover the extending portion 41. The extending portion 41 according to the second embodiment has the insulating coating film portion 41a at a portion held by the holding member 50. The insulating coating film portion 41a is provided between the holding member 50 and the beam member 30.

More specifically, the holding member 50 includes the upper holding portion 51 and the lower holding portion 52. The lower holding portion 52 is a so-called convex bracket (or omega bracket) and is fixed to the beam member 30. The extending portion 41 is interposed between the lower holding portion 52 and the beam member 30. The upper holding portion 51 is disposed on the lower holding portion 52. Here, the upper surface 52a of the lower holding portion 52 and the upper surface 51a of the upper holding portion 51 are spaced apart from each other by a predetermined distance. An opening (not shown) for fixing a connector portion 61 described below is provided on the upper surface 51a of the upper holding portion 51.

The signal line portion 60 according to the second embodiment passes above the holding member 50 and transmits a signal related to the first battery module 20a or the second battery module 20b. The holding member 50 according to the second embodiment holds the signal line portion 60. The holding member 50 according to the second embodiment supports the signal line portion 60 from below.

The signal line portion 60 according to the second embodiment includes a connector portion 61. The holding member 50 holds the connector portion 61. The holding member 50 according to the second embodiment supports the connector portion 61 from below. Specifically, the connector portion 61 is fixed to the holding member 50 by inserting and engaging a trim clip (not shown) provided in the connector portion 61 from above into an opening (not shown) provided on the upper surface 51a of the upper holding portion 51.

According to the second embodiment, the battery pack 100 includes the housing 10, the first battery module 20a, the second battery module 20b, the beam member 30, the connecting member 40, and the holding member 50. The extending portion 41 according to the second embodiment is disposed between the holding member 50 and the beam member 30. As in the first embodiment, in the second embodiment, the movement of the extending portion 41 in the up-down direction can be suppressed. Therefore, unintended contact between the battery module 20 and the connecting member 40 (bus bar) due to deformation of the connecting member 40 (bus bar) can be suppressed.

In addition, the extending portion 41 according to the second embodiment has the insulating coating film portion 41a at a portion held by the holding member 50. As a result, conduction between the metal portion of the connecting member 40 and the holding member 50 can be suppressed.

In addition, the signal line portion 60 according to the second embodiment passes above the holding member 50 and transmits a signal related to the first battery module 20a or the second battery module 20b. The holding member 50 according to the second embodiment holds the signal line portion 60. As a result, a space above the holding member 50 can be effectively used. Further, the wiring of the signal line portion 60 can be made to fit well.

In addition, the signal line portion 60 according to the second embodiment includes the connector portion 61, and the holding member 50 holds the connector portion 61. As a result, the connector portion 61 can be stably disposed.

### <Third Embodiment>

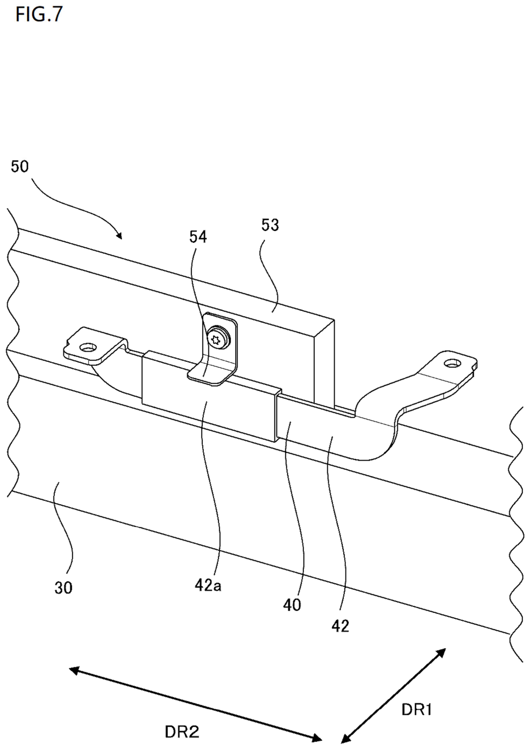

FIG. 7 is a schematic perspective view showing a periphery of the holding member 50 according to the third embodiment. The connecting member 40 according to the third embodiment includes the elongated portion 42 as in the first embodiment. The elongated portion 42 extends in the direction DR2. In the third embodiment, the elongated portion 42 has a flat plate shape. The elongated portion 42 extends linearly with respect to the direction DR2. The holding member 50 according to the third embodiment holds the elongated portion 42.

The holding member 50 includes a wall portion 53 and a protruding portion 54. The wall portion 53 is disposed along the beam member 30. In the third embodiment, the wall portion 53 has a flat plate shape and extends in the direction DR2. A height of the wall portion 53 in the up-down direction is higher than a height of the beam member 30.

The protruding portion 54 protrudes from the wall portion 53 in the arrangement direction DR1. In the third embodiment, the protruding portion 54 is made of metal. In the third embodiment, the protruding portion 54 is attached to the wall portion 53. The protruding portion 54 is bent substantially at a right angle. The protruding portion 54 is disposed above the elongated portion 42. The protruding portion 54 presses the elongated portion 42.

The elongated portion 42 according to the third embodiment is interposed between the protruding portion 54 and the beam member 30. The elongated portion 42 has an insulating coating film portion 42a at a portion interposed between the protruding portion 54 and the beam member 30.

According to the third embodiment, the battery pack 100 includes the housing 10, the first battery module 20a, the second battery module 20b, the connecting member 40, and the holding member 50. The connecting member 40 according to the third embodiment includes the elongated portion 42 that extends in the direction DR2. The holding member 50 holds the elongated portion 42. In the third embodiment, the movement of the elongated portion 42 (connecting member 40) in the up-down direction can be suppressed. Therefore, unintended contact between the battery module 20 and the connecting member 40 (bus bar) due to deformation of the connecting member 40 (bus bar) can be suppressed.

Further, according to the third embodiment, the battery pack 100 further includes the beam member 30, and the holding member 50 includes the wall portion 53 and the protruding portion 54. The elongated portion 42 is interposed between the protruding portion 54 and the beam member 30. As a result, the connecting member 40 (elongated portion 42) can be stably fixed.

Further, the elongated portion 42 has the insulating coating film portion 42a at a portion interposed between the protruding portion 54 and the beam member 30. As a result, conduction between the metal portion of the connecting member 40 and the holding member 50 (protruding portion 54) can be suppressed.

Hereinabove, the embodiments of the present invention have been described with reference to the drawings. However, the embodiment is merely an example of the present invention, and various configurations other than the above-described configurations can also be adopted.

In the first embodiment, for example, in a case where the battery module 20 indicated by "A" in FIG. 2 is the first battery module 20a, the second battery module 20b may be the battery module 20 indicated by "C" in FIG. 2, and the connecting member 40 may be configured to connect the battery module 20 indicated by "A" and the battery module 20 indicated by "C". In this case, the arrangement direction is the X direction.

In the first embodiment, the beam member 30 may not be provided, and the holding member 50 may not be provided on the beam member 30. In this case, the holding member 50 may be provided on the lower plate 11a.

In FIG. 2, only one connecting member 40 is shown for simplicity of description, but the connecting member 40 may be provided in a plurality. For example, in addition to the connecting member 40 shown in FIG. 2, a connecting member 40a that connects the battery module 20 indicated by "C" in FIG. 2 and the battery module 20 indicated by "D" in FIG. 2 may be provided, and a connecting member 40b that connects the battery module 20 indicated by "B" in FIG. 2 and the battery module 20 indicated by "D" in FIG. 2 may be further provided. The connecting member 40b may be disposed to be along a portion of the outer frame 11b close to the battery module 20 indicated by "B" in FIG. 2 and the battery module 20 indicated by "D" in FIG. 2 (not between the battery module 20 indicated by "B" in FIG. 2 and the battery module 20 indicated by "D" in FIG. 2).

In addition, instead of the configuration described above, the battery pack 100 may have a configuration in which a connecting member 40c that connects the battery module 20 indicated by "A" in FIG. 2 and the battery module 20 indicated by "C" in FIG. 2, a connecting member 40d that connects the battery module 20 indicated by "B" in FIG. 2 and the battery module 20 indicated by "D" in FIG. 2, and a connecting member 40e that connects the battery module 20 indicated by "C" in FIG. 2 and the battery module 20 indicated by "D" in FIG. 2 are provided. The connecting member 40e may be disposed on a side opposite to the terminal 13 of the battery module 20 indicated by "C" in FIG. 2 and the battery module 20 indicated by "D" in FIG. 2 (not between the battery module 20 indicated by "C" in FIG. 2 and the battery module 20 indicated by "D" in FIG. 2).

As described above, the position of the connecting member 40 can be appropriately changed depending on the position of the positive terminal or the negative terminal of the module provided in the battery module 20.

Hereinafter, examples of the reference forms will be added.
1. A battery pack including:
   a housing,
   a first battery module disposed in the housing,
   a second battery module disposed side by side with the first battery module,
   a beam member disposed between the first battery module and the second battery module and extending in one direction, and
   a connecting member that electrically connects the first battery module and the second battery module,
   in which the connecting member includes an extending portion that extends in an arrangement direction in which the first battery module and the second battery module are arranged side by side,
   the battery pack further includes a holding member that holds the extending portion, and
   the extending portion is disposed between the holding member and the beam member.
2. The battery pack according to 1.,
   in which the extending portion has an insulating coating film portion at a portion held by the holding member.
3. The battery pack according to 1. or 2., further including:
   a signal line portion that passes above the holding member and transmits a signal related to the first battery module or the second battery module,
   in which the holding member holds the signal line portion.
4. The battery pack according to 3,
   in which the signal line portion includes a connector portion, and
   the holding member holds the connector portion.

This application claims priority based on Japanese Patent Application No. 2023-114715 filed on July 12, 2023, the entire disclosure of which is incorporated herein by reference.

### REFERENCE SIGNS LIST

- 10: housing
- 20: battery module
- 20a: first battery module
- 20b: second battery module
- 21: housing case
- 30: beam member
- 40: connecting member
- 41: extending portion
- 41a: insulating coating film portion
- 50: holding member
- 51: upper holding portion
- 52: lower holding portion
- 60: signal line portion
- 61: connector portion
- 100: battery pack

## Claims

1. A battery pack comprising:
a housing;
a first battery module disposed in the housing;
a second battery module disposed side by side with the first battery module;
a beam member disposed between the first battery module and the second battery module and extending in one direction; and
a connecting member that electrically connects the first battery module and the second battery module,
wherein the connecting member includes an extending portion that extends in an arrangement direction in which the first battery module and the second battery module are arranged side by side,
the battery pack further comprises a holding member that holds the extending portion, and
the extending portion is disposed between the holding member and the beam member.

2. The battery pack according to Claim 1,
wherein the extending portion has an insulating coating film portion at a portion held by the holding member.

3. The battery pack according to Claim 1 or 2, further comprising:
a signal line portion that passes above the holding member and transmits a signal related to the first battery module or the second battery module,
wherein the holding member holds the signal line portion.

4. The battery pack according to Claim 3,
wherein the signal line portion includes a connector portion, and
the holding member holds the connector portion.
